# FASCICULE DE BREVET EUROPEEN

(11) **EP 2 134 650 B1**
(45) Date de publication et mention de la délivrance du brevet: **04.01.2017**
(21) Numéro de dépôt: 08787780.9
(22) Date de dépôt: 12.03.2008
(51) Int. Cl.: C01B 25/37, C01B 25/45, C01G 51/04, C01G 45/02, H01M 4/58, H01M 4/24, H01M 10/38, H01M 4/505, H01M 4/525, H01M 10/052

(54) **SYNTHÈSE D'UN COMPOSÉ LIMPO4**
SYNTHESE EINER LIMPO4-VERBINDUNG
SYNTHESIS OF AN LIMPO4 COMPOUND

(30) Priorité: 14.03.2007 FR 0701847
(43) Date de publication de la demande: 23.12.2009
(73) Titulaire: Commissariat à l'Énergie Atomique et aux Énergies Alternatives, 75015 Paris (FR)
(72) Inventeur: PATOUX, Sébastien, F-38600 Fontaine (FR); PAGANO, Carole, F-38330 Saint-Ismier (FR); BOURBON, Carole, F-38590 Saint-Michel de Saint-Geoirs (FR); LE CRAS, Frédéric, F-38470 Notre Dame de l'Osier (FR)
(74) Mandataire: Hecké, Gérard
(86) Numéro de dépôt international: PCT/FR2008/000322
(87) Numéro de publication internationale: WO 2008/132336

(56) Documents cités:
- WO-A-2006/105848
- US-A1- 2007 031 732
- DATABASE WPI Week 200618 Thomson Scientific, London, GB; AN 2006-169723 XP002461497 & JP 2006 056754 A (MITSUI KOZAN KK) 2 mars 2006 (2006-03-02) -& JP 2006 056754 A (MITSUI MINING CO LTD) 2 mars 2006 (2006-03-02)
- GRIGOROVA ET AL: "Thermodynamical control of the grain size of LiCoPO4 powders" JOURNAL OF PHYSICS AND CHEMISTRY OF SOLIDS, PERGAMON PRESS, LONDON, GB, vol. 66, no. 10, 1 octobre 2005 (2005-10-01), pages 1598-1608, XP005200534 ISSN: 0022-3697

## Description

### Domaine technique de l'invention

L'invention concerne les composés LiMPO₄ et leurs dérivés, M étant un métal de transition choisi parmi le groupe constitué par le cobalt, le nickel et le manganèse, leur utilisation comme matériau d'électrode dans un accumulateur au lithium et leur synthèse.

### État de la technique

Les accumulateurs au lithium ont tendance à remplacer des accumulateurs nickel-cadmium (Ni-Cd) ou nickel-hydrure métallique (Ni-MH) comme source d'énergie autonome, en particulier dans les équipements portables. Cette tendance s'explique par l'amélioration continue des performances des accumulateurs au lithium, leur conférant des densités d'énergie massique et volumique nettement supérieures à celles des accumulateurs Ni-Cd et Ni-MH. Ainsi, alors que les premiers accumulateurs au lithium de type Li-ion possédaient une densité d'énergie massique d'environ 85 Wh/kg, il est actuellement possible d'obtenir une densité d'énergie massique d'environ 200 Wh/kg. À titre de comparaison, les accumulateurs Ni-MH et les accumulateurs Ni-Cd ont respectivement une densité d'énergie massique de 100 Wh/kg et de 50 Wh/kg.

Les matériaux actifs utilisés dans les accumulateurs au lithium actuellement commercialisés sont, pour l'électrode positive, des composés lamellaires tels que LiCoO₂, LiNiO₂ et les oxydes mixtes Li(Ni, Co, Mn, Al)O₂ ou des composés de structure spinelle ayant une composition proche de celle de LiMn₂O₄. L'électrode négative est généralement constituée de carbone (graphite, coke,...) ou éventuellement d'un spinelle Li₄Ti₅O₁₂ ou d'un métal formant un alliage avec le lithium (Sn, Si, ...). Les capacités massiques théoriques et pratiques de ces composés, pour une tension de fonctionnement par rapport au lithium métallique de l'ordre de 4 Volts, sont respectivement de 275 mAh/g et 140 mAh/g pour LiCoO₂ et LiNiO₂ et de 148 mAh/g et 120 mAh/g pour LiMn₂O₄.

Depuis l'émergence des accumulateurs au lithium, plusieurs générations de matériaux d'électrode positive ont successivement fait leur apparition. De plus, de nouvelles générations d'accumulateurs au lithium sont déjà en voies de développement pour des applications toujours plus diversifiées tel que le domaine de l'automobile hybride ou électrique, le stockage de l'énergie dans des cellules photovoltaïques, ... Or, pour répondre aux demandes en énergie toujours plus importantes (par unité de masse et/ou de volume), il est indispensable de trouver des matériaux actifs d'intercalation du lithium encore plus performants.

Depuis quelques années, les matériaux de structures tridimensionnelles construites à partir d'entités polyanioniques de type XOₙ^{m-}, avec X = P, S, Mo, W... suscitent un réel engouement dans le domaine des accumulateurs au lithium et, plus particulièrement, les orthophosphates de structure olivine et de formule générale LiMPO₄, avec M = Fe, Mn, Co, Ni.

Parmi les quatre composés de formule LiMPO₄, seul le phosphate de fer lithié, LiFePO₄, est actuellement capable de répondre expérimentalement aux attentes, eu égard à une capacité spécifique pratique désormais proche de la valeur théorique, à savoir 170 mAh/g. Néanmoins, ce composé, basé sur la mise en oeuvre du couple électrochimique Fe³⁺/Fe²⁺, fonctionne à un potentiel de 3,4 V vs. Li⁺/Li, ce qui implique une densité d'énergie massique spécifique maximale de 580 Wh/kg. Les orthophosphates de manganèse, de cobalt et de nickel, isotypes de LiFePO₄, sont connus pour présenter des potentiels d'extraction/insertion des ions lithium plus élevés, respectivement 4,1 V, 4,8 V et 5,1 V vs. Li⁺/Li et les capacités spécifiques théoriques de ces trois composés sont proches de celle de LiFePO₄. Cependant, d'importants progrès demeurent à réaliser d'un point de vue expérimental pour obtenir des valeurs de capacités spécifiques pratiques satisfaisantes.

A titre d'exemple, dans l'article « Improved electrode characterisctics of olivine-LiCoPO4 processed by high energy milling » (Journal of Power Sources, 160 (2006) 523-528), M.E. Rabanal et al. rapportent que le lithium peut être réversiblement extrait du composé LiCoPO₄ de structure olivine à un potentiel électrochimique d'extraction/insertion du lithium d'environ 4,8 V vs. Li⁺/Li et que la capacité spécifique théorique de ce composé est de 167 mAh/g. Cependant, la capacité spécifique pratique de LiCoPO₄ rapportée dans la littérature est relativement médiocre. De plus, la courbe électrochimique d'extraction/insertion des ions lithium dans LiCoPO₄ montre une polarisation très importante, principalement due à la faible conductivité électronique et/ou ionique du matériau. A titre d'exemple, dans l'article de M.E. Rabanal et al., la capacité spécifique en première décharge, à un régime de C/10, est décevante (104mAh/g) et une perte rapide de la capacité spécifique pratique est constatée au cours du cyclage. Le composé LiCoPO₄ a été obtenu par un procédé de réaction à l'état solide à haute température. Un mélange stoechiométrique de Li₂CO₃, de Co₃O₄ et de (NH₄)₂HPO₄ est, ainsi, broyé et calciné sous air, à 350°C pendant 12 heures. Après refroidissement, le mélange d'oxydes est pressé sous forme d'une pastille et recuit à haute température (750°C) pendant 24 heures, sous air. Le produit est ensuite broyé et traité thermiquement à 350°C, pendant 9 heures pour assurer l'homogénéité et la pureté du produit final LiCoPO₄.

Pour améliorer les performances électrochimiques et notamment la conductivité électronique de LiCoPO₄, il est courant de réduire la taille des particules de LiCoPO₄ et de déposer à la surface desdites particules du carbone. M.E. Rabanal et al. proposent, ainsi, d'améliorer la conductivité électronique de LiCoPO₄ et donc de diminuer la polarisation de l'accumulateur, en réduisant, par broyage pendant 30 minutes, la taille des particules de LiCoPO₄ et en mélangeant lesdites particules avec une grande quantité de carbone (0,8 à 20% en masse).

Cependant, malgré l'emploi de carbone, les performances électrochimiques de LiCoPO₄ préparé par le procédé de synthèse conventionnel restent médiocres. A titre d'exemple, Satya Kishore et al., dans l'article « Influence of isovalent ion substitution on the electrochemical performance of LiCoPO4 (Materials Research Bulletin, 40 (2005) 1705-1712), obtiennent une capacité spécifique en première décharge de 125 mAh/g de LiCoPO₄. Pour cela, une quantité très importante de carbone (45% en masse) a été employée. Cependant, seulement 60 mAh/g sont restitués après dix cycles de charge/décharge. Ainsi, bien que le carbone permette d'augmenter la capacité initiale en première décharge, la capacité spécifique pratique obtenue après plusieurs cycles de charge et de décharge n'est pas améliorée par la présence du carbone. De plus, une quantité importante de carbone pénalise fortement les densités d'énergie massiques et volumiques de l'électrode, donc de l'accumulateur.

Enfin, J. Wolfenstine et al., dans l'article « Effect of oxygen partial pressure on the discharge capacity of LiCoPO4 (Journal of Power Sources, 144 (2005) 226-230) ont étudié l'effet sur la capacité de décharge de LiCoPO₄ d'une synthèse dudit composé par réaction à l'état solide à haute température, réalisée sous atmosphère d'argon, sous air ou sous oxygène et avec des précurseurs dont l'un au moins contient du carbone. Le composé LiCoPO₄ préparé sous atmosphère d'argon présente de meilleures performances électrochimiques, lesquelles restent néanmoins faibles (environ 100 mAh/g en première décharge).

Le document WO2006/105848 A2 décrit un procédé de synthèse d'un composé LiMPO₄, M étant un métal de transition choisi parmi le groupe constitué par Cr, Mn, Co, Fe et Ni. Le composé est synthétisé en faisant réagir un composé de lithium, par exemple le carbonate ou l'hydroxyde de lithium, un réactif comportant du métal de transition M, par exemple le sulfate, l'haloïde, le nitrate, le phosphate, le carboxylate ou l'acétylacétonate, et un réactif à base de phosphore, par exemple un acide phosphorique, un phosphate, un hydrogénophosphate ou un dihydrogénophosphate. Un précurseur est obtenu par précipitation. Par transformation hydrothermale du précurseur à une température dans l'intervalle de 130-185°C, un matériau nanocristallin de LiMPO₄ en forme de plaquette est obtenu. Le document JP2006056754 décrit la synthèse de LiFePO₄, à partir de NH₄FePO₄ et d'un composé à base de lithium (LiOH ou Li₂CO₃). Le mélange NH₄FePO₄ + (LiOH ou Li₂CO₃) est traité, après mélange, à une température de 250°C ou plus dans une atmosphère inerte.

L'article de Yanqiang Wang propose de synthétiser LiFePO₄ à partir de FePO₄.4H₂O par une réaction en phase liquide-solide en utilisant (NH₄)₂SO₃ comme agent réducteur pour obtenir NH₄FePO₄.H₂O (réaction 1), puis par conversion thermique en présence de LiCOOCH₃.2H₂O (réaction 2).

### Objet de l'invention

L'invention a pour but un procédé de synthèse permettant d'obtenir un composé LiMPO₄ ou un composé de l'un de ses dérivés, où M est un métal de transition choisi parmi Co, Ni et Mn et avantageusement du cobalt et présentant des performances électrochimiques améliorées. Plus particulièrement l'invention a pour but un procédé de synthèse permettant d'obtenir un composé LiMPO₄ ou un composé de l'un de ses dérivés présentant une faible polarisation électrochimique et une capacité spécifique restituée en décharge élevée.

Selon l'invention, ce but est atteint par les revendications annexées.

Plus particulièrement, ce but est atteint par le fait que le procédé comporte au moins une étape consistant à faire réagir du nitrate de lithium avec un précurseur solide, constitué par XMPO₄, nH₂O ou un de ses dérivés et dans lequel -X représente un radical choisi parmi -NH₄ et -H et n représente le nombre de molécules d'eau associées à une entité XMPO₄, à une température inférieure ou égale à 350°C.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- La figure 1 est un graphique représentant les diagrammes de diffraction des rayons X (λ_{CuKα}) de deux composés de formule LiCoPO₄ respectivement préparés selon un mode particulier de réalisation de l'invention et selon une voie de synthèse selon l'art antérieur.
- La figure 2 représente la structure cristallographique de LiCoPO₄ dans le plan (a, b).
- Les figures 3 et 4 représentent deux clichés obtenus par microscopie électronique à balayage, à des grossissements respectifs de 160 fois et 2840 fois d'un composé LiCoPO₄ obtenu selon un mode particulier de réalisation de l'invention.
- Les figures 5 et 6 représentent deux clichés obtenus par microscopie électronique à balayage, à des grossissements respectifs de 1211 fois et 1478 fois du précurseur solide NH₄CoPO₄, nH₂O utilisé lors de la synthèse du composé LiCoPO₄.
- La figure 7 représente les courbes de charge/décharge en mode intentiostatique, en régime C/10, à 20°C, d'un accumulateur au lithium de type Li-Ion comportant respectivement le composé LiCoPO₄ obtenu selon un mode particulier de réalisation de l'invention et d'un matériau composite LiCoPO₄/C obtenu selon l'art antérieur.
- La figure 8 représente l'évolution de la capacité spécifique en charge et en décharge en fonction du nombre de cycles effectués dans le cas du composé LiCoPO₄ obtenu selon un mode particulier de l'invention.
- Les figures 9 et 10 représentent chacune une courbe de cyclage (intensité spécifique en fonction du potentiel) réalisée en mode potentiostatique d'un accumulateur au lithium comportant le composé LiCoPO₄ obtenu selon un mode particulier de l'invention, avec respectivement un balayage de 100 mV/h et de 10 mV/h, à 20°C.
- La figure 11 représente l'évolution de la capacité spécifique en décharge en fonction du régime de cyclage pour un accumulateur au lithium comportant le composé LiCoPO₄ obtenu selon un mode particulier de l'invention.

### Description de modes particuliers de réalisation

Selon un mode particulier de réalisation, le composé LiCoPO₄ est synthétisé en faisant réagir deux précurseurs à basse température, c'est-à-dire à une température inférieure ou égale à 350°C et avantageusement à une température d'environ 300°C, par exemple de 300°C ±10°C.

Le premier précurseur est un précurseur solide, source à la fois de cobalt et des entités polyanioniques PO₄³⁻. Il est constitué par le composé de formule générale XCoPO₄, n H₂O. X représente un radical choisi parmi -NH₄ et -H et n représente le nombre de molécules d'eau associées à une entité XCoPO₄. n est, plus particulièrement, compris entre 0 et 9 et préférentiellement entre 0 et 2. De plus, le premier précurseur présente une morphologie particulière, en forme de plaquettes. Par forme de plaquettes, on entend un volume aplani, c'est-à-dire un volume présentant une dimension, et plus particulièrement son épaisseur, très inférieure aux autres dimensions. La section d'un tel volume est, de préférence, sensiblement carrée ou rectangulaire.

Le premier précurseur est, avantageusement, obtenu par précipitation lors de l'ajout d'un premier réactif hydrosoluble comportant du cobalt dans une solution aqueuse contenant un second réactif hydrosoluble à base de phosphore. Avantageusement, le premier réactif est choisi parmi l'acétate d cobalt, l'oxalate de cobalt et le nitrate de cobalt, tandis que le second réactif est choisi parmi (NH₄)₂HPO₄ et NH₄H₂PO₄. Le premier précurseur solide est, par exemple, obtenu en ajoutant goutte-à-goutte une solution aqueuse comportant du cobalt, à une solution aqueuse comportant du phosphore. La réaction entre les deux solutions aqueuses produit un précipité qui est, ensuite, récupéré et séché. Le séchage est, par exemple, réalisé dans une étuve sous air pour évaporer l'eau non structurale. La concentration et le pH des premier et second réactifs peuvent être contrôlés pour permettre la formation du précipité. De plus, la réaction de précipitation est, de préférence, réalisée à température ambiante. Enfin, la taille des grains du produit obtenu après séchage du précipité peut être contrôlée en ajustant la concentration des solutions aqueuses et le pH du milieu réactionnel. Par exemple, une sursaturation importante en phosphore augmente la vitesse de nucléation du précipité au détriment de sa croissance, de telle sorte que les particules sont plus petites, ce qui peut être bénéfique pour former les particules de LiCoPO₄.

Pour obtenir le composé LiCoPO₄, le premier précurseur solide est mis en réaction avec un second précurseur formant une source de lithium, de manière à substituer l'élément -X par l'élément -Li dans le composé XCoPO₄. Le second précurseur est le nitrate de lithium (LiNO₃). Le second précurseur, solide à température ambiante, présente, en effet, l'avantage d'avoir un point de fusion à une température de 255°C. Ainsi, il se présente à l'état liquide lors de la réaction avec le premier précurseur, soit à une température inférieure ou égale à 350°C et, de préférence d'environ 300°C, ce qui permet une meilleure diffusion lors de la réaction entre le nitrate de lithium et le premier précurseur solide. Le premier précurseur solide est, par exemple, ajouté dans un creuset, au second précurseur et l'ensemble est soumis à un traitement thermique réalisé à une température inférieure ou égale à 350°C et préférentiellement d'environ 300°C.

Le traitement thermique est avantageusement réalisé sous air, pendant une courte durée, par exemple comprise entre une heure et deux heures et demi. Il peut également être réalisé sous atmosphère inerte, par exemple en présence d'argon ou d'azote.

Ensuite, le résidu solide récupéré dans le creuset est, de préférence, lavé à l'eau distillée et séché pour séparer le composé LiCoPO₄ des autres produits issus de la réaction et pour le purifier. Le séchage est, de préférence, réalisé dans une étuve sous air, à une température comprise entre environ 50°C et environ 100°C.

La réaction entre les deux précurseurs est avantageusement réalisée avec un excès de lithium. Plus particulièrement, la quantité de second précurseur mise en jeu dans ladite réaction est calculée pour obtenir un excès de lithium par rapport à la quantité stoechiométrique nécessaire à l'obtention du composé LiCoPO₄. L'excès de lithium est, par exemple, de 5 à 50 fois supérieur à la quantité stoechiométrique nécessaire.

Un procédé de synthèse selon la présente invention permet d'obtenir un composé LiCoPO₄ de structure olivine mais avec une forme particulière de particules, différente de celle obtenue par une voie de synthèse à l'état solide réalisée à haute température. En effet, il a été constaté de manière surprenante que le composé LiCoPO₄ obtenu en faisant réagir deux précurseurs comportant d'une part le cobalt et le phosphore et d'autre part le lithium, à une température inférieure ou égale à 350°C est sous forme de particules solides :
- très peu ou pas agglomérées
- et présentant la même morphologie que celle du premier précurseur solide, c'est-à-dire en forme de plaquettes, avec, de préférence, une section sensiblement carrée ou rectangulaire munie de côtés ayant une dimension de l'ordre de quelques micromètres et une épaisseur comprise entre 10nm et 1µm selon les conditions de synthèse.

De plus, le composé a une surface spécifique mesurée par la méthode de Brunauer-Emmett-Teller (BET) supérieure ou égale à 5m².g⁻¹ et les particules dudit composé sont avantageusement poreuses.

Selon un exemple particulier, le composé LiCoPO₄ a été réalisé en faisant réagir NH₄CoPO₄, nH20 avec du nitrate de lithium (LiNO₃) à basse température. Plus particulièrement, le précurseur NH₄CoPO₄, nH₂O a été synthétisé par précipitation en solution aqueuse. Une première solution aqueuse est réalisée en dissolvant 13,206 g d'hydrogénophosphate de diammonium ((NH₄)₂HPO₄) dans 0,1 L d'eau distillée. La concentration en phosphore dans ladite première solution aqueuse est alors de 1 mol/L. La première solution est ensuite placée sous agitation magnétique. Puis, une seconde solution aqueuse formée par une solution d'acétate de cobalt avec une concentration en cobalt de 0,5 mol/L, est ajoutée goutte-à-goutte à la première solution. La solution finale, incolore, contient alors un précipité de couleur rose. Ce dernier est lavé, centrifugé et séché pendant 24 heures, à 55°C, ce qui permet d'obtenir une poudre de couleur magenta, qui, une fois analysée, se révèle avoir la composition suivante : NH₄CoPO₄, nH₂O avec n sensiblement égal à 1.

3,7 g de NH₄CoPO₄, nH₂O sont, ensuite, introduits dans un creuset en porcelaine contenant 40,3 g de nitrate de lithium (LiNO₃). Le creuset est introduit dans un four dont la température atteint rapidement 300°C. Après deux heures de traitement thermique, le chauffage du four est arrêté et le creuset est récupéré. Le résidu solide est lavé abondamment à l'eau distillée afin de dissoudre et d'éliminer les sous-produits, puis la poudre obtenue est séchée à 55°C pendant 12 heures.

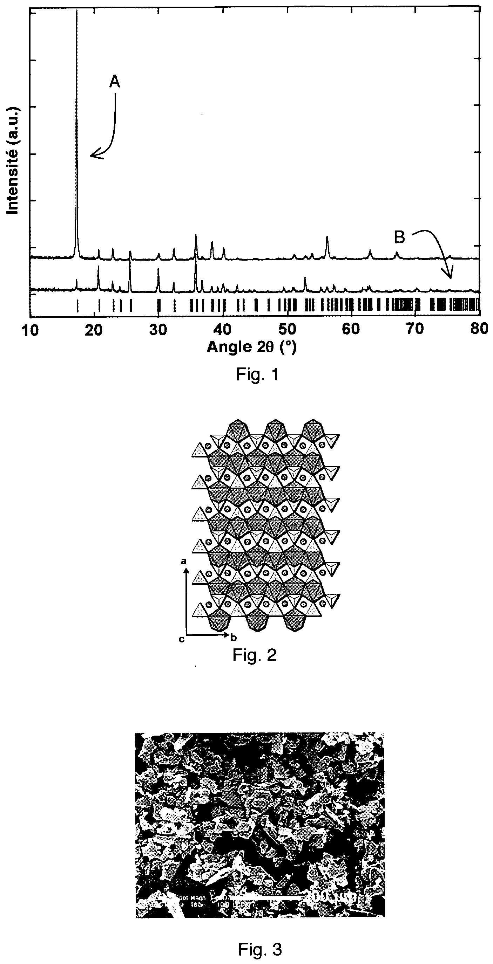

Comme représenté sur la figure 1, cette poudre a été analysée par diffraction aux rayons X. De plus, le spectre de diffraction X de ladite poudre (courbe A) a été comparé à celui (courbe B) d'un composé LiCoPO₄ classique obtenu par voie de synthèse conventionnelle (haute température).

La comparaison entre les courbes A et B permet de constater que la composition de la poudre obtenue dans l'exemple particulier mentionné ci-dessus correspond à celle du composé LiCoPO₄. Elle présente, comme les composés LiCoPO₄ obtenus selon l'art antérieur, une structure olivine telle que celle schématisée dans le plan (a, b) sur la figure 2. Cette structure consiste en un empilement hexagonal compact d'atomes d'oxygène, les ions lithium étant représentés par des cercles sur la figure 2 et les ions cobalt étant localisés dans la moitié des sites octaédriques alors que le phosphore occupe 1/8 des sites tétraédriques. Ainsi, les octaèdres représentés sur la figure 2 correspondent au cobalt liés à 6 atomes d'oxygène (CoO₆) et les tétraèdres représenté sur la figure 2 correspondent au phosphore lié à 4 atomes d'oxygène (PO₄). Les raies discrètes des courbes A et B représentées sur la figure 1 indiquent que les deux composés LiCoPO₄ cristallisent dans le groupe d'espace Pnma et les paramètres de maille sont de l'ordre de 10,2 Å pour « a », de 5,9 Å pour « b » et de 4,7 Å pour « c ».

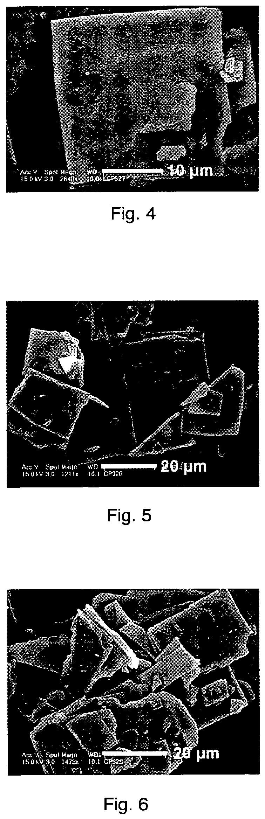

Cependant, contrairement aux composés LiCoPO₄ obtenus selon l'art antérieur, le composé LiCoPO₄ obtenu selon l'invention présente une orientation préférentielle selon (h00). En particulier, comme représenté sur la figure 1, le pic de diffraction (200), visible autour de 17,4 2θ°, possède, pour la courbe A, une aire de pic nettement plus élevée que pour la courbe B. Cette orientation préférentielle selon (h00) est confirmée par les clichés représentés aux figures 3 et 4 obtenus par microscopie électronique à balayage (MEB). On constate, en effet, que les particules synthétisées sont très peu agglomérées et sous forme de plaquettes. Les particules ont en majorité une section rectangulaire ou carrée, d'environ une dizaine de micromètres de côté avec une épaisseur de l'ordre de 100 nanomètres.

Des analyses au microscope électronique à balayage ont également été réalisées pour le précurseur NH₄CoPO₄, nH₂O synthétisé (figures 4 et 5). Les particules dudit précurseur solide sont également sous forme de plaquettes et peu agglomérées. Cela prouve que la morphologie particulière observée pour les particules de LiCoPO₄ provient directement de celle du précurseur solide NH₄CoPO₄,nH₂O et que le traitement thermique réalisé à basse température permet de conserver cette morphologie.

De plus, la transformation de XCoPO₄, nH₂O en LiCoPO₄ peut favoriser la création d'une certaine porosité dans les particules de LiCoPO₄. En effet, de nombreux pores apparaissent lors de la réaction du précurseur XCoPO₄,nH₂O avec le précurseur formant la source de lithium tel qu'un sel de lithium fondu. Lesdits pores ont, de préférence et majoritairement, un diamètre de l'ordre de 10nm.

Enfin, le composé LiCoPO₄ synthétisé dans l'exemple particulier ci-dessus présente une surface spécifique BET de 10,1 m²/g et celle du précurseur solide NH₄CoPO₄, H₂O est, pour ce même exemple, de 1,0 m²/g.

Il a également été constaté que le composé LiCoPO₄ préparé en faisant réagir les deux précurseurs solides à basse température, présente, grâce à sa morphologie particulière, des performances électrochimiques améliorées par rapport aux composés LiCoPO₄ employés dans l'art antérieur. Plus particulièrement, il présente une polarisation électrochimique moins élevée et une capacité spécifique restituée en décharge plus élevée que les composés LiCoPO₄ usuellement synthétisés, sans nécessiter un enrobage in situ par du carbone. En outre, la température de synthèse inhabituellement peu élevée pour un matériau d'électrode d'accumulateur Li-Ion empêche un accroissement excessif et inutile de la taille des particules et permet de conserver une certaine porosité.

Ainsi, un tel composé peut être utilisé comme matériau actif d'électrode pour accumulateur au lithium et notamment comme matériau actif d'électrode positive. Plus particulièrement, l'électrode positive d'un accumulateur au lithium peut être sous la forme d'une dispersion intime comportant le composé LiCoPO₄ synthétisé selon l'invention, un additif conducteur électronique et éventuellement un liant organique. Une telle dispersion est généralement déposée sur une feuille métallique servant de collecteur de courant. L'additif conducteur électronique peut être du carbone (fibres, nanotubes, plaquettes, particules sphériques,...) et le liant organique, destiné à apporter une bonne conduction ionique et une tenue mécanique satisfaisante, peut, par exemple, être constitué d'un polymère choisi parmi les polymères à base de méthacrylate de méthyle, d'acrylonitrile, de fluorure de vinylidène, ainsi que les polyéthers ou les polyesters.

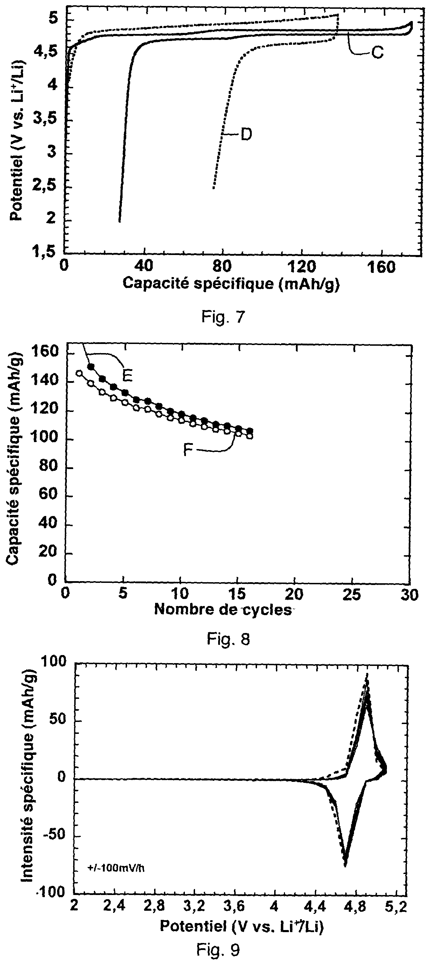

À titre d'illustration, un accumulateur au lithium de type Li-Ion de format "pile bouton" a été réalisé et testé (figures 7 à 11) en employant, comme matériau actif de l'électrode positive, le composé LiCoPO₄ tel que synthétisé selon l'exemple particulier précédemment mentionné. Un tel accumulateur comporte ainsi :
- une électrode négative constituée d'un disque en lithium de 16 mm de diamètre et de 130 µm d'épaisseur, déposée sur un disque de nickel servant de collecteur de courant,
- une électrode positive constituée d'un disque de 14 mm de diamètre et de 25 µm d'épaisseur comprenant le matériau de l'invention préparé selon l'exemple précité (80 % en masse), du noir de carbone (10 % en masse) et de l'hexafluorure de polyvinylidène (10 % en masse) en guise de liant, l'électrode positive étant déposée sur un collecteur de courant en aluminium de 20 micromètres d'épaisseur,
- un séparateur imbibé d'un l'électrolyte liquide à base du sel LiPF₆ (1mol/L) en solution dans un mélange de carbonate de propylène et de carbonate de diméthyle.

Comme représenté par la courbe C sur la figure 7, correspondant au premier cycle de charge/décharge de l'accumulateur au lithium décrit ci-dessus, à 20°C, sous un régime de C/10, celui-ci permet d'extraire la majeure partie du lithium présent dans le matériau d'électrode positive.

De plus, les caractéristiques électrochimiques du composé de l'invention sont avantageuses par rapport à l'art antérieur, principalement en termes de polarisation et de capacité spécifique restituée en décharge.

Sur la figure 7, la courbe C peut être comparée à la courbe D correspondant au premier cycle de charge/décharge d'un accumulateur au lithium comportant, à la place du composé LiCoPO₄ synthétisé selon l'invention, un matériau composite comportant LiCoPO₄ et 3% en masse de carbone et préparé à 650°C, sous argon, par une synthèse dite d'autocombustion. L'observation des deux courbes C et D permet de montrer que la différence de potentiel entre la courbe de charge et la courbe de décharge pour l'accumulateur au lithium comportant le composé LiCoPO₄ synthétisé selon l'invention, c'est-à-dire la polarisation interne, est plus faible que celle pour l'accumulateur au lithium comportant le matériau composite.

La figure 8 représente l'évolution de la capacité spécifique en charge (Courbe E) et en décharge (Courbe F) de l'accumulateur en fonction du nombre de cycles effectués. L'évolution des courbes E et F montre que la capacité spécifique restituée en décharge est proche de celle délivrée en charge. De plus, au-delà de 15 cycles, les capacités spécifiques en charge et en décharge restent supérieures à 100 mAh/g. Enfin, la valeur de la capacité spécifique en charge après un cycle est de l'ordre de 150 mAh/g, valeur bien supérieure à celles rapportées dans les études de l'art antérieur.

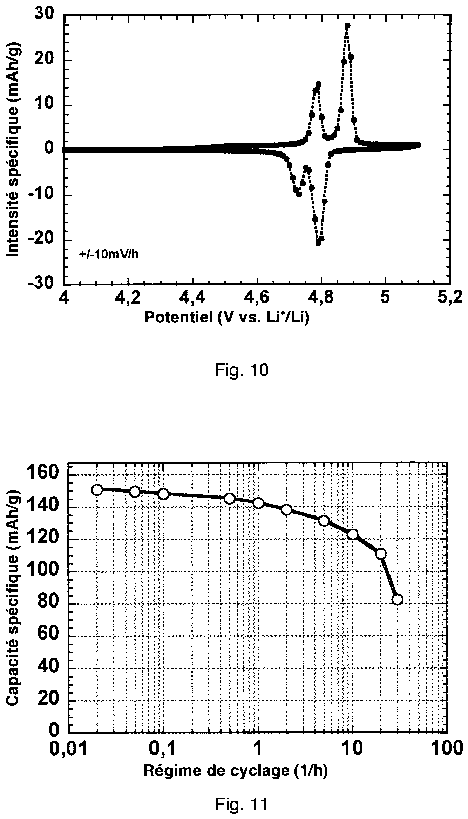

La figure 9, représentant une courbe de voltampérométrie cyclique (balayage +/-100 mV/h), montre également la très bonne réversibilité électrochimique du couple LiCoPO₄/CoPO₄ dans l'accumulateur au lithium selon l'exemple particulier mentionné ci-dessus ainsi que sa reproductibilité en cyclage. La courbe de voltampérométrie cyclique représentée sur la figure 10 et effectuée à balayage plus lent (+/-10 mV/h) permet de distinguer clairement la présence de deux pics d'oxydation et deux pics de réduction correspondant aux paliers visibles sur la courbe C de la figure 7. Ainsi, les paliers ont lieu à un potentiel de 4,76 V vs Li⁺/Li et de 4,84 V vs. Li⁺/Li.

Enfin, le composé LiCoPO₄ synthétisé selon l'invention, eu égard à sa morphologie particulière et à sa faible température de préparation, permet de délivrer des capacités élevées même sous des régimes de cyclage relativement importants (figure 11). Sous un régime de décharge de « C » (décharge effectuée en 1 heure), environ 140 mAh/g sont atteints en première décharge (figure 11).

Un tel procédé de synthèse permet donc d'obtenir un composé LiCoPO₄ présentant des performances électrochimiques améliorées, de sorte qu'il peut être utilisé efficacement comme matériau actif d'électrode pour accumulateur au lithium tel qu'un accumulateur de type Li-Ion. Un tel procédé est, en outre, simple à mettre en oeuvre. Il est, également, rapide car la ou les étapes à mettre en oeuvre sont de courtes durées et il est peu énergétique car il peut être réalisé sous air.

Un tel procédé de synthèse peut également permettre de synthétiser des dérivés de LiCoPO₄. Par dérivé de LiCoPO₄, on entend un composé présentant une composition majoritairement de type LiCoPO₄ mais pouvant soit contenir des impuretés, soit être dopé ou substitué par n'importe quel autre élément de la classification périodique, soit contenir des lacunes sur les sites lithium, cobalt, phosphore ou oxygène. La synthèse d'un tel dérivé de LiCoPO₄ est alors réalisée en utilisant, de manière analogue, un dérivé du premier précurseur solide, c'est-à-dire un composé présentant majoritairement une composition de type XCoPO₄, n H₂O mais pouvant soit contenir des impuretés, soit être dopé ou substitué par n'importe quel autre élément de la classification périodique, soit contenir des lacunes sur les sites X, Co, P ou O.

De plus, un tel procédé n'est pas limité à la synthèse de LiCoPO₄. En effet, en remplaçant le premier précurseur solide XCoPO₄, nH₂O ou un de ses dérivés par XMPO₄, nH₂O ou un de ses dérivés, dans lequel M est un métal de transition choisi parmi Ni et Mn, il est possible de synthétiser un composé LiMPO₄ ou de l'un de ses dérivés. Par contre, un tel procédé, utilisant le précurseur LiNO₃, ne permet pas la synthèse de LiFePO₄.

Les métaux de transition Co, Ni et Mn de la première série sont, en effet, connus pour adopter une structure de type olivine (LiMPO₄) par des procédés de synthèse voisins. Ainsi, le procédé de synthèse décrit ci-dessus pour LiCoPO₄ peut être généralisé aux autres métaux de transition Ni et Mn. Dans ce cas, le premier précurseur solide XMPO₄, nH₂O peut être obtenu par précipitation lors de l'ajout d'un premier réactif hydrosoluble comportant le métal de transition M dans une solution aqueuse contenant un second réactif hydrosoluble comportant du phosphore, puis par récupération et séchage dudit précipité. Le premier réactif hydrosoluble peut, ainsi, être de l'acétate de métal de transition M, de l'oxalate de métal de transition M ou du nitrate de métal de transition M. De plus, il a été constaté que, comme pour LiCoPO₄, les composés LiMPO₄ avec M = Ni ou Mn et les composés de l'un de leurs dérivés présentent une surface spécifique BET supérieure ou égale à 5m².g⁻¹ et qu'ils sont constitués de particules peu agglomérées formées par des plaquettes. De tels composés peuvent également être utilisés comme matériaux actifs d'une électrode pour accumulateur au lithium.

## Revendications

1. Procédé de synthèse d'un composé LiMPO₄ ou de l'un de ses dérivés, M étant un métal de transition choisi parmi le groupe constitué par Co, Ni et Mn,
**caractérisé en ce que** le procédé comporte au moins une étape consistant à faire réagir, à une température inférieure ou égale à 350°C, du nitrate de lithium avec un précurseur solide, constitué par XMPO₄, nH₂O ou un de ses dérivés et dans lequel -X représente un radical choisi parmi -NH₄ et -H et n représente le nombre de molécules d'eau associées à une entité XMPO₄.

2. Procédé selon la revendication 1, **caractérisé en ce que** la température est égale à 300°C.

3. Procédé selon l'une des revendications 1 et 2, **caractérisé en ce que** la réaction entre le précurseur solide et le nitrate de lithium est réalisée sous air ou sous atmosphère inerte.

4. Procédé selon l'une quelconque des revendications 1 à 3, **caractérisé en ce que** la durée de la réaction entre le précurseur solide et le nitrate de lithium est comprise entre une heure et deux heures et demi.

5. Procédé selon l'une quelconque des revendications 1 à 4, **caractérisé en ce que** la réaction entre le précurseur solide et le nitrate de lithium est réalisée avec un excès de lithium.

6. Procédé selon l'une quelconque des revendications 1 à 5, **caractérisé en ce que** la réaction entre le précurseur solide et le nitrate de lithium est suivie d'une étape de séparation permettant d'isoler le composé LiMPO₄ ou un de ses dérivés.

7. Procédé selon la revendication 6, **caractérisé en ce que** l'étape de séparation consiste à laver à l'eau distillée le produit obtenu lors de la réaction entre le précurseur solide et le nitrate de lithium et à sécher, sous air et à une température comprise entre 50°C et 100°C le composé résultant du lavage.

8. Procédé selon l'une quelconque des revendications 1 à 7, **caractérisé en ce que** le précurseur solide est obtenu par précipitation lors de l'ajout d'un premier réactif hydrosoluble comportant le métal de transition M dans une solution aqueuse contenant un second réactif hydrosoluble comportant du phosphore, puis par récupération et séchage dudit précipité.

9. Procédé selon la revendication 8, **caractérisé en ce que** le premier réactif est choisi parmi l'acétate du métal de transition M, l'oxalate du métal de transition M et le nitrate du métal de transition M.

10. Procédé selon l'une des revendications 8 et 9, **caractérisé en ce que** le second réactif est choisi parmi (NH₄)₂HPO₄ et NH₄H₂PO₄.

## Patentansprüche

1. Verfahren zur Synthese einer Verbindung LiMPO₄ oder einer ihrer Derivate, wobei M ein Übergangsmetall ist, das aus der Gruppe von Co, Ni und Mn gewählt wird,
**dadurch gekennzeichnet,**
**dass** das Verfahren mindestens einen Verfahrensschritt umfasst, der darin besteht, bei einer Temperatur von 350° C oder darunter Lithiumnitrat mit einem festen Zwischenstoff reagieren zu lassen, welcher aus XMPO₄, nH₂O oder einem seiner Derivate besteht und in dem -X für ein Radikal steht, das unter -NH₄ und -H gewählt wird, und n für die Anzahl von Wassermolekülen in Verbindung mit einer Gesamtheit XMPO₄ steht.

2. Verfahren nach Anspruch 1,
**dadurch gekennzeichnet,**
**dass** die Temperatur 300° C beträgt.

3. Verfahren nach einem der Ansprüche 1 und 2,
**dadurch gekennzeichnet,**
**dass** die Reaktion zwischen dem festen Zwischenstoff und dem Lithiumnitrat unter Luft oder unter Inertgas erfolgt.

4. Verfahren nach einem der Ansprüche 1 bis 3,
**dadurch gekennzeichnet,**
**dass** die Dauer der Reaktion zwischen dem festen Zwischenstoff und dem Lithiumnitrat zwischen einer Stunde und zweieinhalb Stunden beträgt.

5. Verfahren nach einem der Ansprüche 1 bis 4,
**dadurch gekennzeichnet,**
**dass** die Reaktion zwischen dem festen Zwischenstoff und dem Lithiumnitrat mit einem Überschuss an Lithium erfolgt.

6. Verfahren nach einem der Ansprüche 1 bis 5,
**dadurch gekennzeichnet,**
**dass** auf die Reaktion zwischen dem festen Zwischenstoff und dem Lithiumnitrat ein Verfahrensschritt der Trennung folgt, der es ermöglicht, die Verbindung LiMPO₄ oder eine ihrer Derivate zu isolieren.

7. Verfahren nach Anspruch 6,
**dadurch gekennzeichnet,**
**dass** der Verfahrensschritt der Trennung darin besteht, das bei der Reaktion zwischen dem festen Zwischenstoff und dem Lithiumnitrat erhaltene Produkt mit destilliertem Wasser zu waschen und die sich beim Waschen ergebende Verbindung unter Luft und bei einer Temperatur, die zwischen 50° C und 100° C beträgt, zu trocknen.

8. Verfahren nach einem der Ansprüche 1 bis 7,
**dadurch gekennzeichnet,**
**dass** der Zwischenstoff durch Niederschlag während des Beimengens eines ersten wasserlöslichen Reagens, welches das Übergangsmetall M enthält, in eine wässerige Lösung, die ein zweites wasserlöslichen Reagens enthält, welches Phosphor enthält, sodann durch Sammeln und Trocknen dieses Niederschlags gewonnen wird.

9. Verfahren nach Anspruch 8,
**dadurch gekennzeichnet,**
**dass** das erste Reagens aus dem Übergangsmetall M -Azetat, dem Übergangsmetall M - Oxalat und dem Übergangsmetall M -Nitrat gewählt wird.

10. Verfahren nach einem der Ansprüche 8 und 9,
**dadurch gekennzeichnet,**
**dass** das zweite Reagens unter (NH₄)₂HPO₄ und NH₄H₂PO₄ ausgewählt wird.

## Claims

1. A method for synthesizing a LiMPO₄ compound or one of its derivatives, M being a transition metal selected from the group consisting of Co, Ni and Mn, **characterized in that** the method comprises at least one step consisting in making lithium nitrate react with a solid precursor formed by XMPO₄, nH₂O or one of its derivatives and in which -X represents a radical selected from -NH₄ and -H and n represents the number of water molecules associated with an XMPO₄ entity, at a temperature lower than or equal to 350°C.

2. The method according to claim 2, **characterized in that** the temperature is equal to 300°C.

3. The method according to one of claims 1 and 2, **characterized in that** the reaction between the solid precursor and the lithium nitrate is performed in air or in an inert atmosphere.

4. The method according to any one of claims 1 to 3, **characterized in that** the duration of the reaction between the solid precursor and the lithium nitrate is comprised between one hour and two and a half hours.

5. The method according to any one of claims 1 to 4, **characterized in that** the reaction between the solid precursor and the lithium nitrate is performed with an excess of lithium.

6. The method according to any one of claims 1 to 5, **characterized in that** the reaction between the solid precursor and the lithium nitrate is followed by a separation step allowing to isolate the LiMPO₄ compound or one of its derivatives.

7. The method according to claim 6, **characterized in that** the separation step consists in washing the product obtained by the reaction between the solid precursor and the lithium nitrate with distilled water and in drying in air the compound resulting from washing at a temperature comprised between 50°C and 100°C.

8. The method according to any one of claims 1 to 7, **characterized in that** the solid precursor is obtained by precipitation when a first water-soluble reagent comprising the transition metal M is added in an aqueous solution containing a second water-soluble reagent comprising phosphorus, and then by recovery and drying of said precipitate.

9. The method according to claim 8, **characterized in that** the first reagent is selected from the acetate of the transition metal M, the oxalate of the transition metal M and the nitrate of the transition metal M.

10. The method according to one of claims 8 and 9, **characterized in that** the second reagent is selected from (NH₄)₂HPO₄ and NH₄H₂PO₄.
